# EUROPEAN PATENT APPLICATION

(11) **EP 2 664 654 A1**
(43) Date of publication of application: **20.11.2013**
(21) Application number: 12733870.5
(22) Date of filing: 11.01.2012
(51) Int. Cl.: C08L 101/00, C08J 5/24, C08K 3/04, C08K 7/06, C08L 29/14

(54) **THERMOSETTING-RESIN-CONTAINING LIQUID HAVING DISPERSED FINE CARBON FIBERS, AND MOLDED THERMOSET RESIN OBTAINED THEREFROM**

(30) Priority: 12.01.2011 JP 2011004059
(71) Applicant: Hodogaya Chemical Co., Ltd., Tokyo 104-0028 (JP)
(72) Inventor: TARUMOTO, Naohiro, Tokyo 104-0028 (JP); TSUKADA, Takayuki, Tokyo 104-0028 (JP); URAGAMI, Tatsumi, Tokyo 104-0028 (JP)
(74) Representative: Müller-Boré & Partner Patentanwälte
(86) International application number: PCT/JP2012/050405
(87) International publication number: WO 2012/096317

(57) **Abstract**

In dispersing a fine carbon fiber (CNT) in a thermosetting resin, the invention disperses and disentangles the fine carbon fiber being aggregates form in the thermosetting resin solution, maintains the stable dispersed state, lowers the viscosity of the thermosetting resin solution in which the fine carbon fiber is dispersed, and provides a thermosetting resin formed article containing the fine carbon fiber by curing the fine carbon fiber dispersion solution and a production method thereof.

The thermosetting resin-containing solution in which a fine carbon fiber is dispersed, comprises (A) a thermosetting resin, (B) the fine carbon fiber and (C) a viscosity-decreasing agent for fine carbon fiber having a chemical structure represented by the following general formula (1),
[Chemical 1] 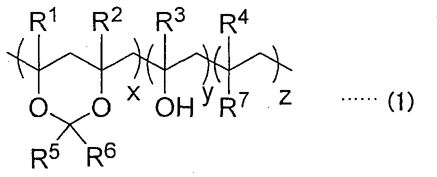 wherein R¹ to R⁷ are hydrogen atoms or the like,
R⁵ and R⁶ may be bonded together to form a ring, and all of them have not more than 30 carbon atoms, and
wherein the average total carbon number (4x + 2y + 2z) in the compound is 400 to 6000, and x, y and z satisfy 0.6 ≦ (x + z)/(x + y + z) ≦ 0.9 and, further, satisfy 0.6 ≦ y/ (y + z) ≦ 0.9.

## Description

### Technical Field:

This invention relates to a thermosetting resin-containing solution containing fine carbon fibers, which enables fine carbon fibers to be favorably dispersed and disentangled in a thermosetting resin solution, stably maintains the dispersed and disentangled state, and enables the viscosity of the thermosetting resin solution to be lowered, and relates to a cured body thereof and to a thermosetting resin formed article containing reinforcing fibers and the fine carbon fibers.

### Background Art:

A fine carbon fiber of which the presence was confirmed about 20 years ago is a tubular material having a diameter of not more than 1 *µ*m and is, usually, called carbon nanotube (CNT). Ideally, sheets of a 6-membered mesh structure of carbon atoms form tubes which are concentric with the tube axis, and the tubes often being formed 2 layers, 3 layers, 4 layers or more layers. The fine carbon fiber possesses various properties depending on the number of the 6-membered mesh structures of carbon atoms and on the thickness of the tubes. By utilizing its properties such as chemical properties, electrical properties, mechanical properties, heat-conducting properties, and structural properties, attempts have now been made to apply the fine carbon fiber to the production of articles for preventing static electricity, electrode material for secondary cells, reinforced resin composite material, electromagnetic wave absorbing material, electricity-heat conversion material, electric field-emitting cathode material for flat panel displays, transparent electrically conducting film, etc. It has, further, been expected to apply the fine carbon fiber to the production of heat-electricity conversion material, capacitor electrodes, hydrogen storage material, electric wirings, heat-radiating material, solar cell material and catalyst carrier material.

As the articles for preventing static electricity, there can be exemplified a tray, carrier tape and the like obtained by adding the fine carbon fiber to a thermoplastic resin to prevent static electricity from generating at the time of conveying and transporting the semiconductor parts and semiconductor products. The fine carbon fiber has now been widely used on account of its such advantages that it exhibits higher electric conduction than the spherical carbon materials such as carbon black used so far, assumes the fibrous shape making it possible to prevent the occurrence of static electricity despite it is added in small amounts, and split off little from the matrix resin.

In the use for the secondary cells, the fine carbon fiber is used as an additive to the electrode films. Namely, upon being mixed into the graphite for activating the cathode, it has been confirmed that the fine carbon fiber exhibits the effect of assisting the electric conduction and improving recycling performance. The fine carbon fiber has now been employed already for the lithium-ion cells for cellular phones and personal computers. By mixing the fine carbon fiber into the lithium cobalt oxide, lithium iron phosphate and the like compound which are the materials for activating the cathode in the large-output and large-capacity secondary cells for hybrid cars and electric cars, effects are expected such as improving the electric conduction, improving the strength of the anode film, attaining higher density and improving permeation of the electrode solution, and study has been forwarded.

As for the reinforced resin composite materials, study has been vigorously forwarded in an effort to further improve the rigidity by adding the carbon fiber or a mixture thereof with a glass fiber into a resin, to improve surface properties and dynamic properties by adding the fine carbon fiber into the FRP (fiber-reinforced plastics) formed articles that use cloth or mat of carbon or glass, or to improve the strength of the fiber by adding the fine carbon fiber into the synthetic fibers.

In the production of electronic devices, attempts have been made to form fine wirings of integrated circuits (LSI, Ultra-LSI, etc.), to produce a cathode source for emitting homogeneous electric field by the screen printing or the blowing method, to apply the fine carbon fiber to a flat panel display, and to produce electrically conducting ceramics. It is also expected to expand the use to power devices since the fine carbon fiber has a larger electrically conducting capacity than the metal wirings.

In the production of electrically conducting materials, study has been vigorously forwarded to produce an antistatic plate based on the compression, casting, injection, extrusion or stretching method, to produce an antistatic film of the order of microns by using an electrically conducting coating material, an electricity-suppressing film and an electrically conducting primer film for electrostatic coating, and to produce a semi-transparent or transparent electrically conducting thin film of the order of submicrons by the spin-coating or bar-coating method.

As described above, study has been forwarded to use the fine carbon fiber as a material having electrical, mechanical and composite effects for a variety of applications. To utilize the effect of adding the fine carbon fiber to a maximum degree, however, it is essential that the fine carbon fiber is homogeneously and stably dispersed in water, organic solvent, resin solution, main agent of thermosetting resin and in a dispersion medium such as thermoplastic resin.

However, the fine carbon fiber forms an aggregate as the tubular materials of diameters of not more than 1 *µ*m entangle together or has a network structure, and has, usually, been placed in the market in a state in which they are gathered together to further increase the bulk density. Therefore, it is very difficult to have the fine carbon fibers disentangled into individual tubular materials or dispersed in a state of a size of several nanometers to several tens of nanometers. Further, the fine carbon fibers disentangled into individual tubular members or the aggregates of sizes of several nanometers to several tens of nanometers, produce a very strong aggregating force (Van Der Waals force) among the fibers and involve difficulty for being homogeneously dispersed in water, organic solvent, resin solution, thermosetting resin or in a dispersion medium such as thermoplastic resin. Besides, the fine carbon fibers or aggregates that are once disentangled and dispersed tend to be easily aggregated again. Because of these reasons, it is difficult to obtain a dispersion solution in which the fine carbon fibers are dispersed to a sufficient degree maintaining stability.

As described above, despite of their peculiar and useful properties, it is virtually difficult to apply the fine carbon fibers to various uses because of the problem of dispersion. Briefly described below are the past reports attempted in patent documents 1 to 3 that are concerned to organic solvent dispersion solutions containing carbon nanotubes (synonymous to fine carbon fiber), patent document 4 concerned to dispersing a fine carbon fiber in an organic solvent solution of a resin soluble in an organic solvent, and patent documents 5 and 6 concerned to CNT-containing aqueous dispersion solutions.

The patent document 1 discloses a method of producing a dispersion solution containing carbon nanotubes (synonymous to fine carbon fiber). That is, the method comprises (1) the step of obtaining a mixture of carbon nanotubes by vibration-milling the carbon nanotubes and a cyclic organic compound with vibrations of 5 to 120 s⁻¹, and (2) the step of obtaining a dispersion solution containing carbon nanotubes by adding an organic solvent to the mixture of carbon nanotubes, the cyclic organic compound used in the step (1) having solubility in the organic solvent used in the step (2). As the cyclic organic compound, there can be used polyvinyl pyrrolidone, polystyrene sulfonate and polythiophene.

The patent document 2 discloses a method of forming a thin carbon nanotube coating comprising dispersing carbon nanotubes in a hydrocarbon medium to which a basic high molecular dispersant is added, and applying a high voltage using a material to be coated as the anode in the solvent to form a thin carbon nanotube coating on the surface of the anode. A polyester maleidoamine salt is used as the basic high molecular dispersing agent.

The patent document 3 discloses a solution in which carbon nanotubes are dispersed, comprising carbon nanotubes, amide-type polar organic solvent and polyvinyl pyrrolidone. An N-methyl-2-pyrrolidone (NMP) is used as the amide-type polar organic solvent.

The patent document 4 discloses a carbon nanotube dispersion solution which features improved dispersion property obtained by using a compound having a hydroxyl group and an acetal skeleton as an agent for dispersing the carbon nanotubes, in order to disperse the carbon nanotubes in an organic solvent solution of a resin that is soluble in the organic solvent.

The patent document 5 discloses a method of producing a paste in which carbon nanotubes are dispersed, wherein an amphoteric molecule is attached to at least part of each carbon nanotube that constitutes a plurality of carbon nanotube bundles, the amphoteric molecule attached to a carbon nanotube constituting a carbon nanotube bundle among the carbon nanotube bundles works to electrically attract an amphoteric molecule attached to a carbon nanotube constituting another carbon nanotube bundle neighboring thereto, and the carbon nanotubes constituting the plurality of carbon nanotube bundles are dispersed in an isolated manner.

The patent document 6 discloses an aqueous dispersion of carbon nanotubes obtained by dispersing the carbon nanotubes in an aqueous solution which contains an anionic surfactant (A), a nonionic surfactant (B) and an anionic surfactant (C) which is a compound different from the anionic surfactant (A).

The dispersion solutions obtained by dispersing carbon nanotubes in the organic solvent described in the patent documents 1 to 3 are favorable carbon nanotube dispersion solutions using an anionic surfactant as the polar organic solvent and using a nonionic surfactant as the nonpolar organic solvent, but cannot be applied to both the polar organic solvent and the nonpolar organic solvent.
Further, the method of dispersing carbon nanotubes in an organic solvent solution of a resin that is soluble in the organic solvent solution is a method of dispersing carbon nanotubes by utilizing the viscosity of the resin solution and a carbon nanotube dispersant posing, however, a limitation on the resins that can be used (patent document 4). Besides, this technology is for dispersing the carbon nanotubes by utilizing the viscosity of the resin solution. Therefore, the carbon nanotubes must be added after the resin has been dissolved in the organic solvent posing limitation on the range of practical use. Moreover, since the dispersion operation is conducted in the viscous solution, the viscosity of the solution adversely affects the effort for improving the degree of dispersion above a given level. Therefore, the aggregates of carbon nanotubes finally obtained have sizes of roughly about 20 *µ*m at the smallest, and it is difficult to more finely disperse them leaving a problem in the long-term stability, too.
The aqueous dispersions of carbon nanotubes described in the patent documents 5 and 6, on the other hand, maintain favorably dispersed state, i.e., are dispersion solutions of carbon nanotubes of high degrees of completion, and are finding use in various fields. The problem, however, is that these dispersion solutions use water as the solvent, and cannot be put to use in the applications where their properties tend to be deteriorated by water.

As described above, many attempts have been made to disperse the carbon nanotubes in water, organic solvent or resin solution maintaining stability without, however, accompanied by sufficient effects. No report has been made, either, concerning the viscosity-decreasing agent for carbon nanotubes used for lowering the viscosity of the thermosetting resin which is the main component in which the carbon nanotubes are dispersed.

As for the study for preparing reinforced resins by using the carbon nanotubes, further, a patent document 7 discloses a thermoplastic resin compound reinforced with a carbon fiber and patent documents 8 to 10 are reporting bats, antennas, rackets and the like formed by using the fiber-reinforced resins.

The patent document 7 is disclosing a carbon fiber-reinforced thermoplastic resin compound containing a carbon fiber of a fiber diameter of 5 to 20 *µ*m and a fiber length of 1 to 10 mm, carbon nanotubes having a center axis of a hollow structure with a fiber diameter of 0.5 to 500 nm and a fiber length of not more than 1000 *µ*m, and a thermoplastic resin, the carbon fiber being contained in an amount of 5 to 40% by weight, the carbon nanotubes being contained in an amount of 1 to 50% by weight and the thermoplastic resin being contained in an amount of 50 to 99% by weight.

The patent document 8 discloses a bat made from a fiber-reinforced resin comprising a reinforcing fiber and a matrix resin, the matrix resin being mixed with carbon nanotubes of a crystalline material that forms a single-layer structure or a multilayer structure of which the crystals on the hexahedral mesh planes of carbon being wound in a cylindrical shape and forming fine hollow portions in the central portions thereof, the average fiber diameters thereof lying in a range of 10 to 300 nm.

The patent document 9 discloses a fiber-reinforced resin antenna which is a formed article of a mixture comprising 1 to 80% by mass of carbon nanotubes and 99 to 20% by mass of a resin, the carbon nanotubes having a fiber diameter of 0.5 to not more than 300 nm, a fiber length of not more than 1000 *µ*m, an aspect ratio of 3 to 500 and a multilayer structure in which cylindrical carbon layers are overlapping one upon the other, the center axes thereof forming a hollow structure.

The patent document 10 discloses a racket frame made from a fiber-reinforced resin comprising a reinforcing fiber and a matrix resin, the matrix resin being mixed with carbon nanotubes of a crystalline material that forms a single-layer structure or a multilayer structure of which the crystals on the hexahedral mesh planes of carbon being wound in a cylindrical shape and forming fine hollow portions in the central portions thereof, the average fiber diameters of the carbon nanotubes lying in a range of 10 to 300 nm.

### Prior Art Documents:

### Patent Documents:

Patent document 1: WO2007/004652
Patent document 2: JP-A-2006-63436
Patent document 3: JP-A-2005-162877
Patent document 4: JP-A-2008-248412
Patent document 5: JP-A-2007-39623
Patent document 6: W02010/041750
Patent document 7: JP-A-2006-028313
Patent document 8: JP-A-2004-202004
Patent document 9: JP-A-2005-109870
Patent document 10: JP-A-2004-202001

### Outline of the Invention:

### Problems that the Invention is to Solve:

In dispersing a fine carbon fiber (CNT) in a thermosetting resin, a problem that the invention is to solve is to homogeneously disperse and disentangle the fine carbon fiber being aggregated, and to obtain a stably dispersed state in the thermosetting resin solution, to lower the viscosity of the thermosetting resin solution in which the fine carbon fiber is dispersed, and to provide a thermosetting resin formed article containing the fine carbon fiber by curing the fine carbon fiber dispersion solution and the production method thereof.
Another problem of the invention is to provide a thermosetting resin solution which contains a reinforcing fiber and the fine carbon fiber, the fine carbon fiber being homogeneously and stably dispersed in the thermosetting resin solution, and to provide a formed article obtained by curing the resin solution.

### Means for Solving the Problems:

In order to solve the above problems, the present inventors have forwarded the study, discovered that a compound having a specific chemical structure helps disentangled and homogeneously disperse the aggregates of the fine carbon fibers in a thermosetting resin solution to lower the viscosity of the fine carbon fiber, that the obtained fine carbon fiber-containing thermosetting resin solution stably maintains the state of low viscosity, that the thermosetting resin solution maintains its excellent properties despite a reinforcing fiber is contained therein, and that the article formed by curing the thermosetting resin solution as a whole exhibits homogeneous and excellent mechanical and physical properties, and have thus arrived at the present invention.
According to the present invention, therefore, there are provided a thermosetting resin-containing solution, a thermosetting resin formed article and a production method thereof as described below.

1. A thermosetting resin-containing solution in which a fine carbon fiber is dispersed, comprising (A) a thermosetting resin, (B) the fine carbon fiber and (C) a viscosity-decreasing agent for fine carbon fiber having a chemical structure represented by the following general formula (1),
   [Chemical 1] 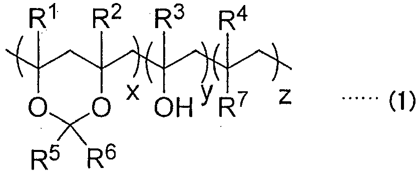 wherein R¹ to R⁴, independently from each other, are represented by hydrogen atoms, hydroxyl groups, alkyl groups, hydroxyalkyl groups, alkyloxy groups, acyloxy groups, carboxyl groups, acyl groups, primary amino groups, secondary amino groups, tertiary amino groups, aryl groups, aryloxy groups or heterocyclic groups,
   R⁵ and R⁶, independently from each other, are represented by hydrogen atoms, alkyl groups, aryl groups or heterocyclic groups, and R⁵ and R⁶ may be bonded together to form a ring,
   R⁷ is represented by a hydrogen atom, an alkyl group, a hydroxyalkyl group, an alkyloxy group, an acyloxy group, a carbonyl group, a carboxyl group, a primary amino group, a secondary amino group, a tertiary amino group, an aryl group, an aryloxy group or a heterocyclic group,
   R¹ to R⁷ all have not more than 30 carbon atoms,
   In the formula (1), if assuming that the unit x has 4 carbon atoms, and the units y and z have 2 carbon atoms, respectively, the calculated average total carbon number (4x + 2y + 2z) in the compound is 400 to 6000; and if x, y and z are each an integer of 1 or more, 0.6 ≦ (x + z) / (x + y + z) ≦ 0.9 is satisfied; and if x is 0 and y and z are each an integer of 1 or more, 0.6 ≦ y/(y + z) ≦ 0.9 is satisfied.

2. The thermosetting resin-containing solution as described in 1 above, wherein (C) the viscosity-decreasing agent for fine carbon fiber has a chemical structure represented by the following general formula (2),
   [Chemical 2] 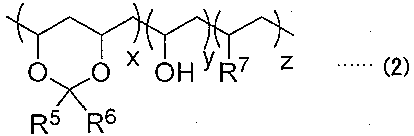 wherein R⁵ to R⁷, x, y and z are as defined in the above formula (1).

3. The thermosetting resin-containing solution as described in 1 above, wherein (C) the viscosity-decreasing agent for fine carbon fiber has a chemical structure represented by the following general formula (3),
   [Chemical 3] 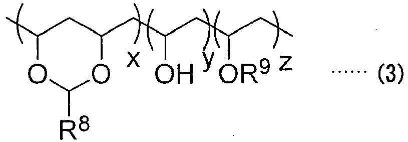 wherein R⁸ is represented by a hydrogen atom, an alkyl group, an aryl group or a heterocyclic group each having 1 to 30 carbon atoms,
   R⁹ is represented by a hydrogen atom, an alkyl group, an alkylcarbonyl group, an aryl group or a heterocyclic group each having 1 to 30 carbon atoms, and
   In the formula (3), if assuming that the unit x has 4 carbon atoms, and the units y and z have 2 carbon atoms, respectively, the calculated average total carbon number (4x + 2y + 2z) in the compound is 400 to 6000; and if x, y and z are each an integer of 1 or more, 0.75 ≦ (x + z)/(x + y + z) ≦ 0.9 is satisfied; and if x is 0 and y and z are each an integer of 1 or more, 0.75 ≦ y/(y + z) ≦ 0.9 is satisfied.

4. The thermosetting resin-containing solution as described in any one of 1 to 3 above, wherein (A) the thermosetting resin is a two-liquid mixed type thermosetting resin.

5. The thermosetting resin-containing solution as described in any one of 1 to 4 above, wherein a styrene monomer is contained in an amount of 20 to 60% by mass in the thermosetting resin-containing solution.

6. The thermosetting resin-containing solution as described in any one of 1 to 5 above, wherein the viscosity-decreasing agent for fine carbon fiber is contained in an amount of 0.01 to 50 parts by mass per 100 parts by mass of (B) the fine carbon fiber.

7. The thermosetting resin-containing solution as described in any one of 1 to 6 above, wherein (B) the fine carbon fiber is contained in the thermosetting resin-containing solution in an amount of 0.01 to 30 parts by mass per 100 parts by mass of the resin-containing solution.

8. The thermosetting resin-containing solution as described in any one of 1 to 7 above, wherein (B) the fine carbon fiber is a fine carbon fiber having an outer diameter of 0.5 to 200 nm.

9. The thermosetting resin-containing solution as described in any one of 1 to 8 above, wherein (B) the fine carbon fiber is a network-like structure of the fine carbon fiber comprising multilayered fine carbon fibers having an outer diameter of 15 to 150 nm, the structure of the fine carbon fiber being in appearance that a plurality of fine carbon fibers stretching out, having granular portions by which the fine carbon fibers are bonded together, and the granular portions being formed during the growing process of the structure of the fine carbon fiber and having a grain size not less than 1.3 times as great as the outer diameter of the fine carbon fibers.

10. A thermosetting resin formed article containing fine carbon fiber obtained by curing the thermosetting resin-containing solution of any one of 1 to 9 above.

11. A thermosetting resin formed article containing a reinforcing fiber and a fine carbon fiber obtained by that a cloth, a sheet or a mat of the reinforcing fiber is impregnated with the thermosetting resin-containing solution of any one of 1 to 9 above and cured.

12. The thermosetting resin formed article as described in 11 above, wherein the reinforcing fiber is a glass fiber, a carbon fiber or an aramid fiber.

13. The thermosetting resin formed article as described in 11 above, wherein the reinforcing fiber is the glass fiber.

14. The thermosetting resin formed article as described in 11 above, wherein the formed article has a surface resistivity of 1 x 10¹ to 1 x 10¹¹ Ω/□.

15. A method of producing a thermosetting resin formed article containing a fine carbon fiber, comprising:
   (1) the step of preparing the thermosetting resin-containing solution described in any one of 1 to 9 above; and
   (2) the step of curing the thermosetting resin-containing solution obtained in the above step (1) by adding, as required, a curing agent thereto.

16. A method of producing a thermosetting resin formed article containing a reinforcing fiber and a fine carbon fiber, comprising:
   (1) the step of preparing the thermosetting resin-containing solution described in any one of 1 to 9 above;
   (2') the step of impregnating a cloth, a sheet or a mat of the reinforcing fiber with the thermosetting resin-containing solution obtained in the step (1) above by adding, as required, a curing agent thereto; and
   (3) the step of curing the cloth, the sheet or the mat of the reinforcing fiber impregnated with the thermosetting resin obtained in the step (2') above.

### Effects of the Invention:

The viscosity-decreasing agent for fine carbon fiber represented by the general formulas (1), (2) and (3) of the present invention have a chemical structure in which a structural body having a hydroxyl group which shows high affinity to the fine carbon fiber is bonded to a structural body which, in many cases, has an acetal skeleton. Here, the acetal skeleton, too, has a high affinity to the fine carbon fibers and, therefore, selectively adheres to the surfaces of the fine carbon fiber. Through the mechanical dispersion treatment, therefore, aggregates of the fine carbon fiber can be easily disentangled and dispersed making it possible to stably maintain a state in which the fine carbon fiber is homogeneously dispersed in the thermosetting resin. Besides, the fine carbon fiber dispersion solution has a low viscosity, which is obtained by using the viscosity-decreasing agent for the fine carbon fiber, and can be easily applied to forming articles containing a general reinforcing fiber relying on a general method such as hand lay-up method or resin infusion method to produce a variety of articles.

### Brief Description of the Drawings:

[Fig. 1] is a view showing fine carbon fiber dispersion solutions of Run No. 3 of the present invention and Comparative No. 1 as observed by using an optical microscope.
[Fig. 2] is a view showing the flowing states of the fine carbon fiber dispersion solutions of Runs Nos. 3 and 4 of the present invention and Comparative No. 1.

### Modes for Carrying Out the Invention:

The invention will now be described below in further detail. Described below are the thermosetting resins used in the present invention though the invention is in no way limited thereto only. There can be exemplified epoxy acrylate resin, urethane acrylate resin, half ester resin, unsaturated polyester resin, phenol resin, epoxy resin, melamine resin, urea resin, alkyd resin, polyimide resin and polyurethane resin.

As the thermosetting epoxy acrylate resin, there can be exemplified those produced by Nihon Upica Co. and Showa Denko Co., such as Neopor 8101 (produced by Nihon Upica Co.), Neopor 8250 (produced by Nihon Upica Co.), Neopor 8260 (c), Neopor 8270 (produced by Nihon Upica Co.), Neopor 8355 (produced by Nihon Upica Co.), Neopor 8351 (produced by Nihon Upica Co.) which are of the bifunctional type and has a bisphenol A-type structure; Neopor 8335 (produced by Nihon Upica Co.), Neopor 8414 (produced by Nihon Upica Co.) which are of the bifunctional type and has a modified bisphenol A-type or F-type structure; Neopor 8190 (produced by Nihon Upica Co.), Neopor 8195 (produced by Nihon Upica Co.), Neopor 8317 (produced by Nihon Upica Co.), Neopor 8318 (produced by Nihon Upica Co.), Neopor 8319 (produced by Nihon Upica Co.) which are of the bifunctional type and has a brominated bisphenol A-type structure; Neopor 8371 (produced by Nihon Upica Co.) which is of the bifunctional type and has a special polyphenylene ether-type structure; Neopor 8192 (produced by Nihon Upica Co.), Neopor 8470 (produced by Nihon Upica Co.) which are of the polyfunctional type and has a modified bisphenol A-type structure; Neopor 8475 (produced by Nihon Upica Co.) which is of the polyfunctional type and has a bisphenol F-type structure; Neopor 8411 (produced by Nihon Upica Co.) which is of the polyfunctional type and has a phenol novolak-type structure; and Neopor 8405 (produced by Nihon Upica Co.) which is of the polyfunctional type and has a structure of a nitrogen-containing special type. There can be, further, exemplified Ripoxy R-800 Series having the bisphenol A-type structure produced by Showa Denko Co. (R-802, R-804, R-806, R-806CL, R-804BDA, R-804DA, R-806DA, R-840DA, RT-833DA, RS-7030, RS-6030, RT-933, R-804BT, R-804BCT); Ripoxy H-600 Series having the novolak-type structure produced by Showa Denko Co. (H-600, H-610, H-630, H-6001, H-6008, H-610DA); and Ripoxy S-500 Series having a brominated bisphenol A-type structure produced by Showa Denko Co. (S-510, S-550) and the like.

As the thermosetting urethane acrylate resin, there can be exemplified bifunctional and aromatic type of Upica 8921 (produced by Nihon Upica Co.), Upica 8932 (produced by Nihon Upica Co.), Upica 8940 (produced by Nihon Upica Co.), bifunctional aliphatic type and aromatic type of Upica 8936 (produced by Nihon Upica Co.), Upica 8937 (produced by Nihon Upica Co.), Upica 8980 (produced by Nihon Upica Co.), Upica 8975 (produced by Nihon Upica Co.), Upica 8976 (produced by Nihon Upica Co.) and the like.

As the thermosetting resin used for producing FRP articles, there can be used a variety of resins depending on the place of use and the method of forming. As the resin for decorated plates, there can be used, for example, 1241, 1270 and FKC-541 produced by Nihon Upica Co. and as the resin for continuous forming, there can be used 3140, 3464, 3512, 3570, 4000, 8250H, 8921, 8940 and FMS-401 produced by Nihon Upica Co. As the resin for resin injection, there can be used 4001, 4007 and FRI-130 produced by Nihon Upica Co. and as the resin for pressurized forming, there can be used 7024, 7117, 7015, 7122, 7123, 7501, 7595, 7596, 7601, 7110, 7450, 7506, 7510, 7524,7527 and FMS-783. As the resin for casting, there can be used 2035, 2253, 2075, 2100 and 6424 produced by Nihon Upica Co. and as the resin for lamination, there can be used 5027, 4095, 5126, 5136, 5155, 4580, 22-34, 22-54, 4083, 4512, 5116, 4190, 4300, 4350, 5100, 5250, 5105, 5106, 4072, 4080, 4183, 4267 and 5025 produced by Nihon Upica Co. As the resin for retarding the flame, there can be used FLQ-225, FLT-125, FLT-225, FLP-425, FLT-625, and FLH-350 produced by Nihon Upica Co. and as the resin for top coating, there can be used UT-501 and UT-506 produced by Nihon Upica Co. As the resin for special use, there can be used 8601, 8680, 8671, 8800, 8807, 8820, 8850, 8932 and Neopor 8414 produced by Nihon Upica Co. and as the resin for the gel coat base, there can be used Upica 6360, 6400, 6502, 6510 and 6514 produced by Nihon Upica Co. As the resin for gel coating, there can be used Upica UG-120, UG-312, UG-502, UG-506, UG-510, UG-514, UG-931 and FGT-312 produced by Nihon Upica Co.

As the thermosetting half ester resin, there can be exemplified M-7000 Series (M-7020, M-7030, M-7010, M-7130) and R-7070-1 produced by Showa Denko Co. As the resin for gel coating, there can be used GM-820, M-820, MG-620 and M-620 produced by Showa Denko Co. and as the resin for top coating, there can be used AC-201 and AC-501. As the resin for casting, there can be used E-1000, EFN-1000 and F-910 produced by Showa Denko Co.

As the thermosetting unsaturated polyester resin, there can be exemplified those produced by Nihon Upica Co., Dainihon Ink Kagaku Kogyo Co., Showa Denko Co. and Mitsui Kagaku Co., such as Upica 4516, 4516P, 4529, 4700, 5423, 5524, 5834 and 5836 produced by Nihon Upica Co., Polylite FH-286 produced by Dainihon Ink Co. , Rigolac 150HR produced by Showa Denko Co. and Ester R-280 produced by Mitsui Kagaku Co.

As the thermosetting phenol resin, there can be exemplified those produced by DIC Co., Showa Denko Co. and Sumitomo Bakelite Co., such as DG-630, HP-700, HP-710 and 1196 produced by DIC Co. , and Shownol BRL-240 produced by Showa Denko Co.

As the thermosetting epoxy resin, there can be used those produced by Asahi Kasei E-Materials Co. , Mitsubishi Kagaku Co. , Dow Chemical Japan Co., Nihon Kayaku Co., ADEKA Co., DIC Co., Shin-Nittetsu Kagaku Co. , Nihon Epoxy Jushi Seizo Co. , and Toto Kasei Co. As the liquid epoxy resin of the bisphenol A-type, there can be used Adeka Resins EP-4100, EP-4100G, EP-4100E, EP-4100TX, EP-4300E, EP-4340, EP-4400, EP-4500A, EP-4520S, EP-4520TX and EP-4530 produced by ADEKA Co. As the epoxy resin of the bisphenol F-type, there can be used ADEKA resins EP-4901, EP-4901E and EP-4950 produced by ADEKA Co. As the epoxy resin of the solution type, there can be used Adeka Resin EP-5100-75X and the like produced by ADEKA Co. As the chain-like and alicyclic epoxy resin, there can be used Adeka Resins EP-4000, EP-4005, EP-4004, EP-4080E and EP-4012M. As the epoxy resin used for the electric and electronic materials, there can be used Adeka Resins EP-4000S, EP-4000L, EP-4003S, EP-4010S, EP-4085S, EP-4088S, EPU-78-13S, EPR-4030, EP-49-23 and EP-49-25 produced by Adeka Co. As the polyfunctional epoxy resin, there can be used Adeka Resin EP-5400R and the like produced by Adeka Co. An epoxy resin diluent can be used for them, such as Adeka Resins ED-501, ED-502S, ED-509E, ED-509S, ED-529 and ED-518 which are of the monofunctional reaction type produced by Adeka Co., Adeka Resins ED-503m, ED-506, ED-523T and ED-515 which are of the bifunctional type produced by Adeka Co., Adeka Resins ED-505 and ED-505R which are of the trifunctional type produced by Adeka Co., and Adeka Resins ED-508 and ED-512X which are of the non-reaction type produced by Adeka Co. Preferably, there are used ED-509S, ED-518S, ED-503G and ED-523G.

As the thermosetting polyimide resin, there can be used those produced by Ube Kosan Co., Du Pont Co., Toray Co., Kyocera Co., and Kaneka Co., such as U-varnish-A and U-varnish-S produced by Ube Kosan Co. The polyimide resin is in the state of a polyamic acid that dissolves in an N-methyl-2-pyrrolidone (NMP) solvent, undergoes the ring-closing reaction depending on the temperature even without using the curing agent, and turns into a cured polyimide resin body.

As the thermosetting polyurethane resin, there can be used those produced by Mitsui-Takeda Chemical Co., Mitsubishi Kagaku Sanshi Co., Nihon Polyurethane Co., Daiichi Kogyo Seiyaku Co., Sumika-Bayer Urethane Co., Sanyo Kasei Kogyo Co. , and Asahi Denka Kogyo Co., such as Coronate 4047, Coronate 4048, Coronate 4076, Coronate 4080, Coronate 4090, Coronate 4095, Coronate 4190, Coronate 4192, Coronate 4196, Coronate 6912 and Coronate 6933 produced by Nihon Polyurethane Co.

Described below are the curing agents for the thermosetting resins used in the invention though the invention is in no way limited thereto only. As the curing agents for the thermosetting epoxy acrylate resin, thermosetting urethane acrylate resin, thermosetting half ester resin and thermosetting unsaturated polyester resin, there can be used ketone peroxide, diacyl peroxide, dialkyl peroxide, peroxyketal, alkyl perester, peroxy carbonate and organic peroxides which are the generally used curing agents. For example, there can be used Permek N, Percumyl H, Peroyl MSP, Perbutyl Z, Percumyl D and Nyper BO produced by Nihon Yushi Co. ; Kayamek A, Kayamek M, Kayamek R, Kayamek L, Kayamek LH, Kayamek SP-30C, Kayamek SP-30R, Perkadox CH-50L, Perkadox B-40ES, Perkadox BC-FF, Perkadox 14, Perkadox 16, Trigonox 22-70E, Kayaester CND-C70, Trigonox 23-C70, Kayaester P-70, Kayaester TMPO-70, Trigonox 121, Trigonox 121-50E, Trigonox 121-LS50E, Kayaester O, Kayaester O-50E, Trigonox 21-LS50E, Kayaester AN, Trigonox 42, Trigonox 42LS, Kayabutyl B, Kayacarbon EH-C70, Perkadox 16, Kayacarbon BIC-75, Kayalene 6-70 and Kayacumene H produced by Kayaku Akuzo Co. ; Mepox 55 and BPO Paste produced by Kawaguchi Yakuhin Co.; Lupazole DDM produced by Lucidor-Yoshitomi Co.; and 328, 328E, 328EM and the like produced by Kayaku Akuzo Co. As the mixed curing agents, further, there can be used 328E and 328EM produced by Kayaku Akuzo Co., and Percure VS produced by Nihon Yushi Co. In addition to them, there can be, further, used such cure promoters as cobalt naphthenate, manganese naphthenate and dimethylaniline, as well as a cure retarder.

As the curing agent for the thermosetting epoxy resin, there can be used general latent curing agents, as well as curing agents of the types of aromatic amine, polyamide, ketimine, special polyamide, mercaptane, aliphatic amine and alicyclic amine. As the modified aliphatic polyamine-type curing agent, there can be used Adeka Hardeners EH-433A, EH-427, EH-424A, EH-451Y, EH-458, EH-471, EH-479A, EH-451CM, EH-401A and EH-4199-4B produced by ADEKA Co. As the highly functional polyamide-type curing agent, there can be used Adeka Hardeners EH-4602 and EH-3932A produced by ADEKA Co. As the polyamideamine type curing agent, there can be used Adeka Granmides GM-640, GM-645, GM-650, GM-656, GM-660 and GM-665 and as the latent curing agent, there can be used Adeka Hardeners EM-4344S, EM-4356S, EM-4357S, EM-4339S, EM-4346S, EM-4370S, EM-4380S, EM-4351S, EM-4388S and EM-3636AS. As the modified aromatic polyamine type curing agent, there can be used Adeka Hardeners EH-540-5 and EH-551CH produced by ADEKA Co. As the ketimine type curing agent, there can be used Adeka Hardeners EH-235R, EH-235R-2, EH-235R-2S and EH-235X produced by ADEKA Co and as the polymercaptane type curing agent, there can be used Adeka Hardeners EH-310 and EH-317 produced by ADEKA Co. As the curing agent for the polyurethane resin, further, there can be used amine type curing agents (crosslinking agents) in general. As the curing agent for the phenol resin, further, there can be used organic phosphoric acid compounds which are the general curing agents, such as Shownol BRH-50A produced by Showa Denko Co.

The fine carbon fiber (CNT) used in the present invention can be a single-layer, two-layer or multilayer fine carbon fiber and is used depending on the object. Preferably, the multilayer fine carbon fiber is used in many fields. There is no special limitation on the method of producing the fine carbon fiber, and there can be employed any known production method such as gas-phase growing method using catalyst, arc discharge method, laser deposition method or HiPco method (high-pressure carbon monoxide process).

Described below is the production of a single-layer fine carbon fiber relying on the laser deposition method. There are provided a graphite powder and a mixed lot of fine nickel powder and fine cobalt powder as starting materials. The mixed lot is heated in an electric furnace at 1250°C in an argon atmosphere of 665 hPa (500 Torr), and second harmonic pulses (350 mJ/pulse) of Nd:YAG laser are applied thereto to vaporize carbon and fine metal particles to thereby prepare a single-layer fine carbon fiber.

The above production method is only a typical example, and it is allowable to change the kind of the catalyst metal, kind of the gas, temperature of the electric furnace and wavelength of the laser beam. Further, the single-layer fine carbon fiber may be prepared by a method other than the laser deposition method, such as HiPco method, gas-phase growing method, arc discharge method, carbon monoxide thermal decomposition method, template method in which organic molecules are inserted in fine holes and are thermally decomposed, or a method of depositing both fullerene and a metal.

As an example, described below is a method of producing a two-layer fine carbon fiber by the constant-temperature arc discharge method. The treating method consists of using a surface-treated Si substrate, dipping an alumina powder for 30 minutes in a solution in which a catalyst metal and a promoter metal are dissolved, applying, onto the Si substrate, the dispersion solution thereof obtained by conducting the ultrasonic treatment for another 3 hours, and conducting the drying in the air at 120°C for 2 hours. The substrate is put in a reaction chamber of the apparatus for producing fine carbon fiber. A mixed gas of hydrogen and methane is used as the reaction gas, the gas being fed in a manner of 500 sccm of hydrogen and 10 sccm of methane, and the pressure in the reaction chamber is set to be 70 Torr. The cathode portion is a rod-like discharge portion of Ta. Next, a DC voltage is applied between the anode portion and the cathode portion, and between the anode portion and the substrate, and the discharge voltage is so controlled that the discharge current is 2.5 A constant. As the temperature of the cathode portion becomes 2300°C due to the electric discharge, the state of normal glow discharge turns into a state of abnormal glow discharge. Upon maintaining a state where the discharge current is 2.5 A, the discharge voltage is 700 V and the reaction gas temperature is 3000°C for 10 minutes, the single-layer and two-layer fine carbon fibers can be formed on the whole substrate.

The above production method is only an example, and it is allowable to change the conditions such as the kinds of metals, kinds of the gas and the like. Further, the two-layer fine carbon fiber may be prepared by the methods other than the arc discharge method.

Described below is a method of preparing a multilayer fine carbon fiber having a three-dimensional structure relying on the gas-phase growing method. Basically, by using very fine particles of a transition metal as a catalyst, a starting organic compound such as hydrocarbon is chemically and thermally decomposed by the CVD method to obtain a fiber structure (hereinafter called intermediate body) which is, thereafter, heat-treated at a high temperature to prepare a multilayer fine carbon fiber.

As the starting organic compound, there can be used hydrocarbons such as benzene, toluene and xylene, as well as carbon monoxide and alcohols such as ethanol and the like. As the carbon source, however, it is desired to use at least two or more kinds of carbon compounds having different decomposition temperatures. As for using at least two or more carbon compounds, it does not mean to necessarily use at least two or more kinds of starting organic compounds but it includes an embodiment of using only one kind of the starting organic compound if, for example, there takes place a reaction such as hydrodealkylation of toluene or xylene in the step of synthesizing the fiber structure and two or more carbon compounds having different decomposition temperatures are made present in the subsequent thermal decomposition reaction system. As the atmosphere gas, use is made of an inert gas such as argon, helium or xenon, or hydrogen and as the catalyst, use is made of a transition metal such as iron, cobalt or molybdenum, or a mixture of a transition metal compound such as ferrocene or metal acetate and sulfur or a sulfur compound such as thiophene or iron sulfide.

The intermediate body is synthesized relying on the CVD method for hydrocarbons, that is usually used; i.e., a mixed solution of starting hydrocarbons and the catalyst is evaporated, and a hydrogen gas and the like gas are introduced as a carrier gas into the reactor in which the thermal decomposition is conducted at a temperature of 800 to 1300°C. Namely, there is synthesized an aggregate of a size of several centimeters to several tens of centimeters comprising a plurality of fine carbon fiber structures (intermediates) having a sparse three-dimensional structure in which carbon fibers having outer diameters of 15 to 100 nm are connected with each other by granular bodies that have grown with the particles of the catalyst as nuclei.

The thermal decomposition reaction of the starting hydrocarbons takes place chiefly on the surfaces of the catalyst particles or of the granular bodies that have grown with the catalyst particles as nuclei, and recrystallization of carbon that is formed by the decomposition proceeds in a predetermined direction from the catalyst particles or the granular bodies to grow into fibers. However, by intentionally changing the balance between the rate of the thermal decomposition and the rate of growth, e.g., by using two or more carbon compounds having different decomposition temperatures as the carbon source as described above, it is allowed to three-dimensionally grow the carbon substance with the granular bodies as centers instead of growing the carbon substance in a one-dimensional direction only. The growth of the three-dimensional fine carbon fibers is dependent not only upon the balance between the rate of the thermal decomposition and the rate of growth but also upon the selectivity of crystal surfaces of the catalyst particles, the residence time in the reactor, the temperature profile in the furnace and the like.

In general, the carbon substance grows in the form of a fiber if the rate of growth due to the recrystallization of carbon atoms is faster than the rate of thermal decomposition of the starting organic compound, while the carbon substance grows in the circumferential direction of the catalyst particles if the rate of thermal decomposition is faster than the rate of growth. Therefore, by intentionally changing the balance between the rate of thermal decomposition and the rate of growth, it is allowed to make the carbon substance growing into other directions in a controlled manner instead of growing in a predetermined direction only and, therefore, to form the three-dimensional structure. In order for the above-mentioned three-dimensional structure to be easily formed in which the fibers are connected to each other by the granular bodies in the intermediate that is formed, it is desired to optimize the composition of the catalyst, residence time in the reactor, reaction temperature and gas temperature.

The first intermediate body obtained by heating the mixed gas of catalyst and hydrocarbons at a constant temperature in a range of 800 to 1300°C has assumed a structure like the one obtained by sticking together the patch-like sheet pieces comprising carbon atoms, and its Raman spectrometry shows a very large D-band which is a peak stemming from the lattice defect. Besides, the formed intermediate contains unreacted starting materials, non-fibrous carbon substance, tar and catalyst metal. Therefore, in order to remove residues such as catalyst metal and the like from the intermediate to obtain a desired fine carbon fiber structure with little defect, it is necessary to conduct the heat treatment at a temperature as high as 2400 to 3000°C by a suitable method.

For example, the intermediate is heated at 800 to 1200°C to remove unreacted starting materials and volatile components such as tar, and then annealed at a high temperature of 2400 to 3000°C to prepare a desired structure and, at the same time, the metal catalyst contained in the fiber is evaporated and removed. Here, to protect the structure of the substance, a reducing gas or a trace amount of carbon monoxide gas may be added to the inert gas atmosphere.

Upon annealing the intermediate at a temperature in the range of 2400 to 3000°C, the patch-like sheet pieces comprising carbon atoms bond together to form a plurality of graphene sheet-like layers.

Before or after the heat treatment at such a high temperature, the fine carbon fiber structures are passed through the step where they are shredded to an average equivalent circle diameter of several centimeters and the step where the shredded fine carbon fiber structures are disintegrated to an average equivalent circle diameter of 50 to 100 *µ*m to prepare the fine carbon fibers having a desired average equivalent circle diameter.
The said fine carbon fibers and the production method thereof have been disclosed in the specifications of Japanese Patent Nos. 3761561, 3720044 and 3776111.

The above-mentioned production method is only an example, and it is allowable to change the conditions such as the kind of the metal, the kind of the gases, etc. It is, further, allowable to use multilayer fine carbon fibers produced by the methods other than the gas-phase growing method.

The fine carbon fiber according to the invention is added in an amount in a range of 0.01 to 30 parts by mass, preferably, 0.1 to 20 parts by mass and, more preferably, 0.5 to 10 parts by mass per 100 parts by mass of the thermosetting resin solution before curing. If the amount of the fine carbon fiber is less than 0.01 parts by mass, desired properties based on the fine carbon fiber are not obtained. If the amount of the fine carbon fiber exceeds 30 parts by mass, it becomes difficult to maintain the state in which the fine carbon fiber is stably dispersed. In the invention, the thermosetting resin solution before curing stands for any one of the cases of simply the thermosetting resin solution before curing, the solution of the two-liquid mixed type thermosetting resin or a mixture of the two-liquid mixed type thermosetting resin solution and a styrene monomer.

As the viscosity-decreasing agent for fine carbon fiber used in the invention, a compound is used which is a structural body having a structure of an acetal skeleton (x-unit), a structure of a hydroxyl group (y-unit) and a z-unit as represented by the following general formula (1). The solubility in the non-polar organic solvent chiefly increases with an increase in the value of x-unit that represents the number of the acetal skeletons, whereas the solubility in the polar organic solvent chiefly increases with an increase in the value of y that represents the number of y-unit having a hydroxyl group. The value of z that represents the number of the structural bodies having z-group could contribute to the either side depending on the property of the z-group. If the z-group is an acyloxy group, however, the value of z rather works to improve the solubility in the non-polar organic solvent.

[Chemical 4] 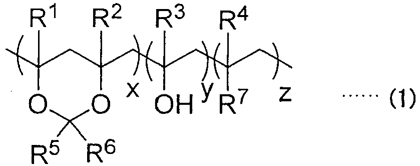 wherein R¹ to R⁴, independently from each other, are represented by hydrogen atoms, hydroxyl groups, alkyl groups, hydroxyalkyl groups, alkyloxy groups, acyloxy groups, carboxyl groups, acyl groups, primary amino groups, secondary amino groups and tertiary amino groups, aryl groups, aryloxy groups or heterocyclic groups,
R⁵ and R⁶, independently from each other, are represented by hydrogen atoms, alkyl groups, aryl groups or heterocyclic groups, and R⁵ and R⁶ may be bonded together to form a ring,
R⁷ is represented by a hydrogen atom, an alkyl group, a hydroxyalkyl group, an alkyloxy group, an acyloxy group, a carbonyl group, a carboxyl group, a primary amino group, a secondary amino group and a tertiary amino group, an aryl group, an aryloxy group or a heterocyclic group,
R¹ to R⁷ all having not more than 30 carbon atoms, and, in the formula (1), if assuming that the unit x has 4 carbon atoms, and the units y and z have 2 carbon atoms, respectively, the calculated average total carbon number (4x + 2y + 2z) in the compound is 400 to 6000; and 0.6 ≦ (x + z)/(x + y + z) ≦ 0.9 is satisfied if x, y and z are each an integer of 1 or more; and 0.6 ≦ y/(y + z) ≦ 0.9 is satisfied if x is 0 and y and z are each an integer of 1 or more.

In the above general formula (1), it is, further, desired that 0.75 ≦ (x + z)/(x + y + z) ≦ 0.9 is satisfied if x, y and z are each an integer of 1 or more, and 0.75 ≦ y/(y + z) ≦ 0.9 is satisfied if x is 0 and y and z are each an integer of 1 or more.
It is considered that the following relationships exist among the properties of the viscosity-decreasing agent for fine carbon fiber used in the invention and the values of x, y and z. In general, the value x greatly contributes to attaining softening property, compatibility and water-resistance, and the value y contributes to attaining adhesiveness to the base, hydrophilic property and reactivity with the thermosetting resin. Further, the value z tends to contribute to the glass transition temperature and the viscosity of the fine carbon fiber solution when the viscosity-decreasing agent for fine carbon fiber is dissolved in the organic solvent.

Of the compounds represented by the above general formula (1), a preferred compound is represented by the following general formula (2).
The thermosetting resin-containing solution as described in claim 1, wherein (C) the viscosity-decreasing agent for fine carbon fiber has a chemical structure represented by the following general formula (2),
[Chemical 5] 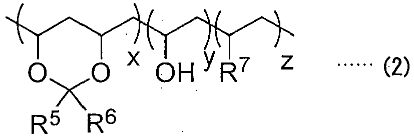 wherein R⁵ to R⁷, x, y and z are as defined in the above formula (1).

Further, of the compounds represented by the above general formula (1), a particularly preferred compound is represented by the following general formula (3).
[Chemical 6] 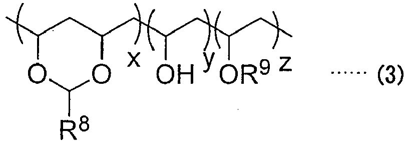 wherein R⁸ is represented by a hydrogen atom, an alkyl group, an aryl group or a heterocyclic group each having 1 to 30 carbon atoms, and
R⁹ is represented by a hydrogen atom, an alkyl group, an alkylcarbonyl group, an aryl group or a heterocyclic group each having 1 to 30 carbon atoms, and
In the formula (3), if assuming that the unit x has 4 carbon atoms, and the units y and z have 2 carbon atoms, respectively, the calculated average total carbon number (4x + 2y + 2z) in the compound is 400 to 6000, and 0.75 ≦ (x + z)/(x + y + z) ≦ 0.9 is satisfied if x, y and z are each an integer of 1 or more, and 0.75 ≦ y/(y + z) ≦ 0.9 is satisfied if x is 0 and y and z are each an integer of 1 or more.

The viscosity-decreasing agent for fine carbon fiber used in the invention represented by the above general formulas (1) to (3) have an average total carbon number (4x + 2y + 2z) in a range of 400 to 6000, preferably, 500 to 5000 and, particularly preferably, 600 to 4000. If the viscosity-decreasing agent for fine carbon fiber has the average total carbon number of less than 400, dispersion stability of the fine carbon fiber decreases, while more than 6000, it is afraid that the solubility in the organic solvent becomes poor.

Upon optimizing the structural composition (x-, y- and z-unit) and the average total carbon number, the viscosity-decreasing agent for fine carbon fiber of the present invention becomes soluble in various thermosetting resins. Described below are concrete examples of the viscosity-decreasing agent for fine carbon fiber used for obtaining a solution for dispersing fine carbon fibers of the present invention though the invention is not limited thereto only.

As the viscosity-decreasing agent for fine carbon fiber represented by the general formula (3) in which x, y and z are each an integer of 1 or more for use in the present invention, there can be preferably selected the following products and their derivatives from the products placed in the market in the trade name of S-LEC B (R⁷ = C₃H₇, R⁹ = COCH₃) produced by Sekisui Kagaku Kogyo Co. and in the trade name of Denkabutyral (R⁸ = C₃H₇, R⁹ = COCH₃) produced by Denki Kagaku Kogyo Co. S-LEC B produced by Sekisui Kagaku Kogyo Co.:

| Products | (x+ Z) /y | Average total carbon number (4x + 2y + 2z) |
|---|---|---|
| Bl-1 | 64/36 | 500 to 700 |
| BL-2 | 64/36 | 700 to 900 |
| BM-1 | 66/34 | 1100 to 1300 |
| BM-2 | 69/31 | 1400 to 1600 |
| BM-5 | 66/34 | 1500 to 1700 |
| BL-1H | 70/30 | 500 to 700 |
| BL-2H | 71/29 | 700 to 900 |
| BL-10 | 72/28 | 400 to 600 |
| BL-5 | 79/21 | 900 to 1100 |
| BL-S | 78/22 | 600 to 800 |
| BM-S | 78/22 | 1400 to 1600 |
| BH-A | 71/29 | 3300 to 3500 |
| BH-S | 78/22 | 1800 to 2000 |
| BH-3 | 66/34 | 3300 to 3500 |
| BH-6 | 70/30 | 3300 to 3500 |
| BX-L | 63/37 | 700 to 900 |
| BX-1 | 63/37 | 4000 to 4200 |
| BX-3 | 67/33 | 4900 to 5100 |
| BX-5 | 67/33 | 5200 to 5400 |
| KS-1 | 75/25 | 1000 to 1200 |
| KS-10 | 75/25 | 600 to 800 |
| KS-3 | 75/25 | 4300 to 4500 |
| KS-5 | 75/25 | 5200 to 5400 |

Denkabutyral produced by Denki Kagaku Kogyo Co:

| Products | (x + Z) /y | Average total carbon number (4x + 2y + 2z) |
|---|---|---|
| #3000-1 | 81/19 | 1200 |
| #3000-2 | 81/19 | 1400 |
| #3000-4 | 81/19 | 1700 |
| #3000-k | 88/12 | 1600 |
| #4000-2 | 81/19 | 2000 |
| #5000-A | 84/16 | 4000 |
| #5000-D | 84/16 | 4000 |
| #6000-C | 84/16 | 4800 |
| #6000-EP | 87/13 | 4800 |
| #6000-CS | 89/11 | 4800 |
| #6000-AS | 88/12 | 4800 |

If x = 0, and y and z are each an integer of 1 or more in the general formula (3), there can be used, for example, G-type Gosenols (R⁹ = COCH₃) and K-type Gosenols (R⁹ = COCH₃) which are the partly saponified products produced by Nihon Gosei Kagaku Co.

G-Type Gosenols:

| Products | y/z | Average total carbon number (2y + 2z) |
|---|---|---|
| GH-23 | 86.5 to 89/11 to 13.5 | 5000 |
| GH-20 | 86.5 to 89/11 to 13.5 | 4600 |
| GH-17 | 86.5 to 89/11 to 13.5 | 4000 |
| GM-14 | 86.5 to 89/11 to 13.5 | 2800 |
| GM-14L | 86.5 to 89/11 to 13.5 | 2800 |
| GL-05 | 86.5 to 89/11 to 13.5 | 1000 |
| GL-03 | 86.5 to 89/11 to 13.5 | 600 |

K-Type Gosenols:

| Products | y/z | Average total carbon number (2y + 2z) |
|---|---|---|
| KH-20 | 78.5 to 81.5/18.5 to 21.5 | 4600 |
| KH-17 | 78.5 to 81.5/18.5 to 21.5 | 4000 |
| KL-05 | 78.5 to 82/18 to 21.5 | 1000 |
| KL-03 | 78.5 to 82/18 to 21.5 | 600 |
| KP-08R | 71 to 73.5/26.5 to 29 | 1600 |
| NK-05R | 71 to 75/25 to 29 | 1000 |

Further, described below are examples of the lowly saponified type produced by Nihon Gosei Kagaku Co.

| Products | y/z |
|---|---|
| LW-100 | 39 to 46/54 to 61 |
| LW-200 | 46 to 53/47 to 54 |
| LW-300 | 53 to 60/40 to 47 |

If the epoxy acrylate resin, urethane acrylate resin, half ester resin, unsaturated polyester resin or polyimide resin is used as the thermosetting resin, particularly preferred products are as described below.

| Products | (x + y) / z | Average total carbon number |
|---|---|---|
| BL-5 | 79/21 | 900 to 1100 |
| BL-S | 78/22 | 600 to 800 |
| BM-S | 78/22 | 1400 to 1600 |
| #3000-k | 88/12 | 1600 |

If the epoxy resin, melamine resin, urea resin, alkyd resin or urethane resin is used as the thermosetting resin, more preferred products are as described below.

| Products | (x + y) /z | Average total carbon number | Calculated mol. wt. |
|---|---|---|---|
| BM-2 | 69/31 | 1400 to 1600 | 5.2 x 10⁴ |
| BM-5 | 66/34 | 1500 to 1700 | 5.3 x 10⁴ |
| BX-1 | 63/37 | 4000 to 4200 | 10 x 10⁴ |

If the phenol resin is used as the thermosetting resin, particularly preferred products are as follows:

| Products | (x + y) /z | Average total carbon number | Calculated mol. wt. |
|---|---|---|---|
| BM-2 | 69/31 | 1400 to 1600 | 5.2 x 10⁴ |
| BM-5 | 66/34 | 1500 to 1700 | 5.3 x 10⁴ |
| BX-1 | 63/37 | 4000 to 4200 | 10 x 10⁴ |

| Products | y/z |
|---|---|
| GL-05 | 86.5 to 89/11 to 13.5 |
| GL-03 | 86.5 to 89/11 to 13.5 |
| KL-05 | 78.5 to 82/18 to 21.5 |
| KL-03 | 78.5 to 82/18 to 21.5 |
| LW-100 | 39 to 46/54 to 61 |
| LW-200 | 46 to 53/47 to 54 |
| LW-300 | 53 to 60/40 to 47 |

The viscosity-decreasing agent for fine carbon fiber according to the invention is added in an amount in a range of 0.01 to 50% by mass, preferably, 0.025 to 40% by mass and, particularly preferably, 0.05 to 30% by mass per 100% by mass of the fine carbon fibers. If the amount of the viscosity-decreasing agent for fine carbon fiber is less than 0.01% by mass, the effect of addition decreases. If the amount of the viscosity-decreasing agent for fine carbon fiber exceeds 50% by mass, the electric conductivity is not often obtained as desired.

According to the invention, the thermosetting resin-containing solution in which the fine carbon fiber is dispersed may be, further, blended with additives depending on the use. As the additives, there can be exemplified inorganic pigment, organic pigment, whisker as a filler, sedimentation-preventing agent, ultraviolet ray-preventing agent, wetting agent, emulsifier, anti-skinning agent, polymerization-preventing agent, anti-dripping agent, defoaming agent, separation-of-color preventing agent, leveling agent, drying agent, curing agent, cure promoter, plasticizer, fire-retarding agent, anti-fungal·anti-algae agent, antibacterial agent, insecticide, underwater anti-fouling agent, metal surface-treating agent, anti-rusting agent, anticorrosive, dewaxing agent, skin-forming agent, bleaching agent, coloring agent, wood sealer, extender, sanding sealer, sealer, cement filler, resin-containing cement paste, etc.

A general dispersing machine can be used for preparing the thermosetting resin-containing solution in which the fine carbon fibers are dispersed. For example, there can be used a beads- mill dispersing machine (Dyno-Mill, Shimano Enterprise Co.), TK Labodisper, TK Fillmix, TK Pipeline Mixer, TK Homo-Mix-Line Mill, TK Homo-Jetter, TK Unimixer, TK Homo-Mix-Line Flow, TK Agi-Homo Disper (which are all produced by Tokushukika Kogyo Co.), Homogenizer·Polytron (Central Kagaku Boeki Co.), Homogenizer·Hystron (Nichion-I-Rika Kiki Seisakusho Co.), Bio-Mixer (Nihon Seiki Seisakusho Co.), Turbo-type Stirrer (Kodaira Seisakusho Co.), Ultra Disper (Asada Tekko Co.), Ebara Milder (Ebara Seisakusho Co.), Ultrasonic Device or Ultrasonic Washer (Azuwan Co.) and Trimix (Inoue Seisakusho Co.).

The thermosetting resin article can be formed by adding the curing agent to the thermosetting resin-containing solution of the invention followed by curing relying on a method which mixes the curing agent to the fine carbon fiber-dispersed solution obtained by dispersing the fine carbon fiber in the thermosetting resin solution and executes the curing reaction, or on a method which adds the fine carbon fiber-dispersed solution in which the fine carbon fiber is dispersed to the mixture of the above resin solution and the curing agent, followed by curing. In order to avoid the curing reaction that takes place due to the heat generated at the time of dispersing the fine carbon fiber, however, the former method is preferred.

As the reinforcing fiber used for the thermosetting resin that contains the reinforcing fiber and the fine carbon fiber according to the present invention, it is allowed to use a fiber that is usually used for reinforcing the resins, such as glass fiber, carbon fiber, boron fiber, aramid fiber and aromatic polyamide fiber. There can be used the reinforcing fiber of any form such as roving, mat, woven fabric, knitted fabric or blade in addition to the one drawn in one direction (sheet).

Described below are the methods of preparing the thermosetting resin that contains the reinforcing fiber and fine carbon fiber of the invention though the invention is not limited thereto only. For example, there can be used hand lay-up method, resin infusion method, spray-up method, preform-matched die method, cold press method, resin injection method (RI method), sheet-molding compound method (SMC method), premixing method, filament-winding method, vacuum-forming method or continuous pull-out forming method.

The hand lay-up method is a method which impregnates a cloth, sheet or mat of the reinforcing fiber with the thermosetting resin-containing solution by using a mohair roller or a Kumage brush, and forms an article while removing bubbles by using a defoaming roller or the like. A series of these processes are carried out by human power and it becomes essential to maintain a labor force of good quality. However, this method is suited for producing sample products, samples for evaluating properties, or for producing many kinds of products in small amount. When the work of forming is carried out by the hand lay-up method, it is essential that the thermosetting resin-containing solution has a viscosity with which the reinforcing fiber can be impregnated by the human power or has a viscosity of such a degree that permits bubbles to be removed by using the defoaming roller. With additives such as filler and the like being added to the thermosetting resin-containing solution, the defoaming can be easily done and the article can be easily formed if the viscosity of the thermosetting resin-containing solution is as close to the viscosity of the thermosetting resin-containing solution without additive as possible.

The resin fusion method is a method which prepares a formed article by placing a cloth, sheet or a mat of a reinforcing fiber on a molding base material, applying a film thereon to cover, reducing the pressure between the base material and the film, and injecting the resin-containing solution therein after the pressure is decreased. Here, the mold may have one surface only lending itself well for the production in intermediate quantity without, however, being capable of producing parts of complex shapes. In carrying out the forming operation by the resin infusion method, further, the thermosetting resin solution must have a viscosity that enables the resin-containing solution to migrate in the mat of reinforcing resin under reduced pressure. The thermosetting resin-containing solution to which additives such as fillers are added can be easily formed if its viscosity is close to that of the thermosetting resin-containing solution without additive as much as possible, and the working time can be shortened.

The formed articles obtained by curing and forming the thermosetting resin-containing solution in which the reinforcing fiber and fine carbon fiber are dispersed, can be used for a variety of applications, such as doctor blade, helmet, racket, fishing rod, golf shaft, blade for wind power generation, parts for vehicles, parts used in the bottom of a vessel, parts for aircraft and automotive parts.

Examples of the invention will be described more concretely though the invention is in no way limited thereto only.

### Example 1.

### <Starting materials and measuring equipment>

As the fine carbon fiber (CNT) in Examples, use was made of multilayer carbon nanotubes: CT-12K (average diameter, 110 nm) or NT-7K (average diameter, 70 nm) produced by Hodogaya Kagaku Kogyo Co. The dispersing device was the Dyno-Mill, beads mill dispersing machine of the MULTI-LAB type, produced by Shinmaru Enterprise Co., and the viscosity was measured (measuring temperature: 20°C) by using a rotary viscometer, Model RE100L, produced by Tokyo Sangyo Co. The surface resistivity of the formed articles was measured (by applying a voltage of 10 V) by using a surface resistivity-measuring instrument produced by Mitsubishi Kagaku Co.

### <Run No. 1>

As the thermosetting resin, use was made of a vinyl ester resin (Neopor 8250L, viscosity of 304 mPas, containing a styrene monomer) produced by Nihon Upica Co. The fine carbon fiber CT-12K was added thereto in an amount of 0.75 parts by mass per 100 parts by mass of the thermosetting resin solution and was dispersed therein by using the beads mill dispersing machine to prepare a solution containing the fine carbon fiber dispersed and disentangled therein. To the dispersion solution a viscosity-decreasing agent for fine carbon fiber (S-LEC BL-S produced by Sekisui Kagaku Kogyo Co.) was added in an amount of 1.5% by mass per the fine carbon fiber. The viscosity-decreasing agent for fine carbon fiber was dissolved by conducting the stirring for one hour, and the obtained fine carbon fiber dispersion solution was measured for its viscosity with the result as shown in Table 1.

### Example 2.

### <Runs Nos. 2 to 7>

Fine carbon fiber dispersion solutions were prepared by the same method as that of Run No. 1 but changing the kind and concentration of the fine carbon fiber as well as the kind and concentration of the viscosity-decreasing agent as shown in Table 1, and were measured for their viscosities with the results as shown in Table 1.

### Comparative Nos. 1 and 2.

Fine carbon fiber dispersion solutions were prepared by the same methods as those of Runs Nos. 1 and 7 but without using the viscosity-decreasing agent for fine carbon fiber, and were measured for their viscosities to obtain the results as shown in Table 1. In Table, the viscosities of those are >649 mPas are those which are so high as to lie outside the measurable range.

### Example 3.

### <Run No. 8>

As the thermosetting resin, use was made of a vinyl ester resin (R7070-1, viscosity of 304 mPas, containing a styrene monomer) produced by Showa Denko Co. The fine carbon fiber CT-12K was added thereto in an amount of 1.5 parts by mass per 100 parts by mass of the thermosetting resin solution and was dispersed therein by using the beads mill dispersing machine to prepare a solution containing the fine carbon fiber dispersed and disentangled therein. To the dispersion solution a viscosity-decreasing agent for fine carbon fiber (S-LEC BL-S produced by Sekisui Kagaku Kogyo Co.) was added in an amount of 2.5% by mass per the fine carbon fiber. The viscosity-decreasing agent for fine carbon fiber was dissolved by conducting the stirring for one hour, and the obtained fine carbon fiber dispersion solution was measured for its viscosity with the result as shown in Table 1.

### Example 4

### <Runs Nos. 9 to 12>

Fine carbon fiber dispersion solutions were prepared by the same method as that of Run No. 8 but changing the kind and concentration of the fine carbon fiber as well as the kind and concentration of the viscosity-decreasing agent as shown in Table 2, and were measured for their viscosities with the results as shown in Table 1.

### Comparative Nos. 3 and 4.

Fine carbon fiber dispersion solutions were prepared by the same methods as those of Runs Nos. 8 and 9 but without using the viscosity-decreasing agent for fine carbon fiber, and were measured for their viscosities with the results as shown in Table 1. In Table, the viscosities of those are >649 mPas are those which are so high as to lie outside the measurable range.

### Example 5.

### <Run No. 13>

As the thermosetting resin, use was made of a novolak-type epoxy acrylate resin solution (Neopor 8411L, viscosity of 288 mPas, containing a styrene monomer) produced by Nihon Upica Co. The fine carbon fiber CT-12K was added thereto in an amount of 1.5 parts by mass per 100 parts by mass of the thermosetting resin solution and was dispersed therein by using the beads mill dispersing machine to prepare a solution containing the fine carbon fiber dispersed and disentangled therein. To the dispersion solution a viscosity-decreasing agent for fine carbon fiber (S-LEC BL-S produced by Sekisui Kagaku Kogyo Co.) was added in an amount of 2.5% by mass per the fine carbon fiber. The viscosity-decreasing agent for fine carbon fiber was dissolved by conducting the stirring for one hour, and the obtained fine carbon fiber dispersion solution was measured for its viscosity with the result as shown in Table 1.

### Comparative No. 5.

A fine carbon fiber dispersion solution was prepared by the same method as that of Run No. 13 but without using the viscosity-decreasing agent for fine carbon fiber, and was measured for its viscosity with the result as shown in Table 1. In Table, the viscosity of which is >649 mPas is the one whose viscosity is so high as to lie outside the measurable range.

It is obvious from the results of Table 1 that the fine carbon fiber dispersion solutions using the viscosity-decreasing agent for fine carbon fiber, suppress the fine carbon fiber disentangled by the mechanical dispersion treatment from aggregating again due to the addition of the viscosity-decreasing agent for fine carbon fiber, and have viscosities lower than those of the solutions to which no viscosity-decreasing agent for fine carbon fiber is added.

### Example 6.

### <Observing the states of dispersion of the fine carbon fiber in the fine carbon fiber dispersion solutions>

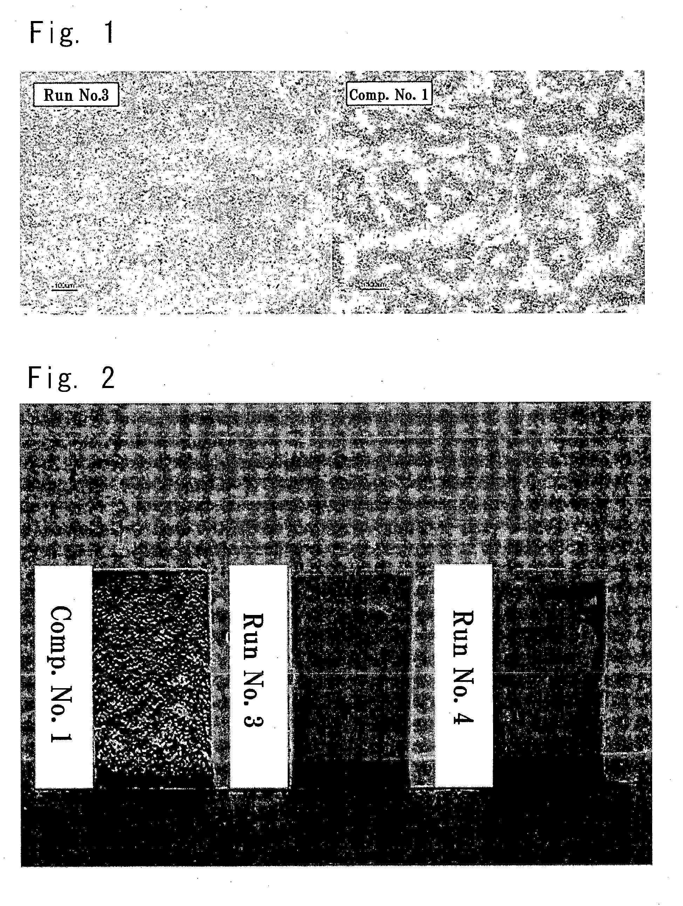

By using an optical microscope, the fine carbon fiber dispersion solutions in Runs Nos. 1 to 13 and Comparative Nos. 1 to 5 were observed for their states of dispersion of the fine carbon fiber with the results as shown in Table 1. Based on the observation by using the optical microscope, the states of dispersion of the fine carbon fiber were evaluated in Table 1 to be ○ if the fine carbon fiber disentangled by the mechanical dispersion treatment had not been aggregated again in the thermosetting resin solutions, and were evaluated to be X if the fine carbon fiber had been aggregated again. For reference, Fig. 1 shows the results of observing, by using the optical microscope, the fine carbon fiber dispersion solutions obtained in Run No. 3 and in Comparative No. 1.

### Example 7.

### <Evaluating the flowability of the fine carbon fiber dispersion solutions>

In the case of resin infusion forming, the fine carbon fiber dispersion solution flows through the mat of the reinforcing fiber during the step of forming. To study this state, the fine carbon fiber dispersion solutions obtained in Runs Nos. 1 to 13 and Comparative Nos. 1 to 5 were used to observe how the fine carbon fiber dispersion solutions containing mono-dispersed fine carbon fiber flowing. Flow of the fine carbon fiber dispersion solutions was evaluated in a manner as described below. Namely, glass substrates (height of 50 x width of 150 x thickness of 1 mm) were placed being tilted at 60 degrees, the fine carbon fiber dispersion solutions of Runs Nos. 1 to 13 were dropped on the glass substrates each in an amount of 2 ml over a width of 30 mm. After 60 minutes from dropping, the flowing states of the fine carbon fiber dispersion solutions of Runs Nos. 1 to 13 on the glass substrates were observed. Flowability of the fine carbon fiber dispersion solutions were evaluated to be ○ if the fine carbon fiber in the fine carbon fiber dispersion solutions flew down together with the resin and there was no fine carbon fiber aggregated again on the surfaces where they flew down, and to be X if the fine carbon fiber did not flow together with the resin but aggregated again on the surfaces where they flew down. The results were shown in Table 1. For reference, Fig. 2 shows the flowing states of the fine carbon fiber dispersion solutions of Runs Nos. 3 and 4 and Comparative No. 1.

**Table 1**

| | CNT Concentration (mass pts) | Kind of CNT | *1 | Viscosity (mPas) | Dispersed state | *2 |
|---|---|---|---|---|---|---|
| Run No. 1 | 0.75 | CT-12K | 1.50 | BL-S | ○ | ○ |
| Run No. 2 | 0.75 | CT-12K | 1.75 | BL-S | ○ | ○ |
| Run No. 3 | 0.75 | CT-12K | 2.00 | BL-S | ○ | ○ |
| Run No. 4 | 0.75 | CT-12K | 4.00 | BM-S | ○ | ○ |
| Run No. 5 | 0.75 | NT-7K | 2.00 | BL-S | ○ | ○ |
| Run No. 6 | 0.75 | NT-7K | 3.00 | BL-S | ○ | ○ |
| Run No. 7 | 0.75 | NT-7K | 4.00 | BM-S | ○ | ○ |
| Run No. 8 | 1.5 | CT-12K | 2.5 | BL-S | ○ | ○ |
| Run No. 9 | 1.0 | NT-7K | 2.5 | BL-S | ○ | ○ |
| Run No. 10 | 1.0 | NT-7K | 5.0 | BL-S | ○ | ○ |
| Run No. 11 | 1.0 | NT-7K | 7.5 | BL-S | ○ | ○ |
| Run No. 12 | 1.0 | NT-7K | 10.0 | BL-S | ○ | ○ |
| Run No. 13 | 1.5 | CT-12K | 2.5 | BL-S | ○ | ○ |
| Comp. No.1 | 0.75 | CT-12K | - | - | × | × |
| Comp. No.2 | 0.75 | NT-7K | - | - | × | × |
| Comp. No.3 | 1.5 | CT-12K | - | - | × | × |
| Comp. No.4 | 1.0 | NT-7K | - | - | × | × |
| Comp. No.5 | 1.5 | CT-12K | - | - | × | × |

| | | | | | | |
|---|---|---|---|---|---|---|
| *1: Concentration of viscosity-decreasing agent (mass%) *2: Flow of fine C fiber dispersion solution | | | | | | |

From the dispersed states of the fine carbon fiber dispersion solutions shown in Table 1, results of the flow test and observed results of Figs. 1 and 2, it is learned that the fine carbon fiber dispersion solutions prepared by using the viscosity-decreasing agent for fine carbon fiber, suppress the fine carbon fiber disentangled by the mechanical dispersion treatment from aggregating again due to the addition of the viscosity-decreasing agent for fine carbon fiber, and maintain the state that the fine carbon fiber is favorably dispersed. Further, the fine carbon fiber in the fine carbon fiber dispersion solutions flows down together with the resin, and there is no fine carbon fiber aggregated again on the flown down surface. It is, therefore, expected that by using the fine carbon fiber dispersion solution of the present invention, it will become possible to produce formed articles of a fine carbon fiber-containing thermosetting resin that contains a reinforcing fiber relying on the resin infusion method, too, without any problem.

### Example 8.

### <Measuring the surface resistivity of the thermosetting resin articles produced by the hand lay-up method, containing reinforcing fiber and fine carbon fiber>

Reinforcing fiber-containing thermosetting resins (glass cloths, 6 plies, products of Nittobo Co.) were produced based on the hand lay-up method by adding, as curing agents, BPO (benzoyl peroxide, produced by Kayaku Akuzo Co.): 1.0 g, CHP (cumene hydroperoxide, produced by Kayaku Akuzo Co.): 0.5 g and P-16 (dimyristylperoxydicarbonate, produced by Kayaku Akuzo Co.): 1.0 g, to the fine carbon fiber dispersion solutions of the above Runs Nos. 1, 2 and 14 to 17 (which were prepared by the same method as that of Run No.1 but changing the kind and concentration of the fine carbon fiber and the kind and concentration of the viscosity-decreasing agent as shown in Table 2). The obtained thermosetting resin formed articles that contained the reinforcing fiber and fine carbon fiber were measured for their surface resistivity with the results as shown in Table 2.

**Table 2**

| | CNT concentration (mass parts) | Kind of CNT | Concentration of viscosity-decreasing agent (mass%) | Kind of viscosity-decreasing agent | Surface resistivity (Ω/□) |
|---|---|---|---|---|---|
| Run No.1 | 0.75 | CT-12K | 1.50 | BL-S | 1.00E+07 |
| Run No.2 | 0.75 | CT-12K | 1.75 | BL-S | 1.00E+08 |
| Run No.14 | 0.78 | CT-12K | 1.75 | BL-S | 2.00E+05 |
| Run No.15 | 0.80 | CT-12K | 1.75 | BL-S | 2.00E+07 |
| Run No.16 | 0.90 | CT-12K | 2.50 | BL-S | 5.00E+04 |
| Run No.17 | 1.00 | CT-12K | 1.75 | BL-S | 4.60E+04 |

As will be learned from Table 2, upon adjusting the amounts of the fine carbon fiber and the viscosity-decreasing agent for fine carbon fiber, the thermosetting resin formed articles containing the reinforcing fiber and fine carbon fiber produced by using the fine carbon fiber dispersion solutions of the invention, exhibit various values of resistivity from the electrically conducting region to the electrically charging region.

### Example 9.

### <Measuring the surface resistivity of the thermosetting resin articles produced by the infusion method, containing the reinforcing fiber and fine carbon fiber >

A thermosetting resin formed article containing the reinforcing fiber and fine carbon fiber (glass mat produced by Nittobo Co., 3 plies, 150 high x 200 wide x 5 mm thick) was produced based on the resin infusion method by adding, as curing agents, BPO: 20 g, CHP: 10 g and P-16: 20 g, to 2000 g of the fine carbon fiber dispersion solution of the Run No. 14. In the infusion forming, the fine carbon fiber dispersion solution was flown from the left side toward the right side. By using a surface resistivity-measuring instrument, the obtained thermosetting resin formed article containing the reinforcing fiber and fine carbon fiber (120 high x 400 wide x 5 mm thick) was measured for its surface resistivity at a total of 30 points each covering 40 x 40 mm² longitudinally and transversely. Results of the values of surface resistivity (Ω/□) at the measured points were as shown in Table 3. Here, Table 3 shows the thermosetting resin containing the reinforcing fiber and fine carbon fiber of a size of 120 high x 400 wide x 5 mm thick as a whole.

**[Table 3]**

| | | 40mm | | 80mm | | 120mm | | 160mm | | 200mm | | 240mm | | 280mm | | 320mm | | 360mm | | 400mm | |
|---|---|---|---|---|---|---|---|---|---|---|---|---|---|---|---|---|---|---|---|---|---|
| 40mm | 1.40E+05 | | 9.00E+04 | | 1.20E+05 | | 1.20E+05 | | 1.50E+05 | | 1.60E+05 | | 8.30E+04 | | 1.00E+05 | | 1.10E+05 | | 1.40E+05 | | |
| 80mm | 2.30E+05 | | 2.80E+05 | | 2.50E+05 | | 1.60E+05 | | 2.00E+05 | | 1.70E+05 | | 1.40E+05 | | 8.90E+05 | | 5.80E+05 | | 2.50E+05 | | |
| 120mm | 1.20E+05 | | 2.20E+05 | | 2.40E+05 | | 2.50E+05 | | 1.40E+05 | | 1.50E+05 | | 3.40E+05 | | 2.90E+05 | | 1.00E+05 | | 2.50E+05 | | |

By using the fine carbon fiber dispersion solution of Comparative No. 1, a thermosetting resin formed article containing the reinforcing fiber and fine carbon fiber (120 high x 400 wide x 5 mm thick) was prepared by the same method as that of Example 9 and was measured for its surface resistivity in the same manner. The measured results were shown in Table 4. Table 4 as a whole shows the thermosetting resin containing the reinforcing fiber and fine carbon fiber of a size of 120 high x 400 wide x 5 mm thick that was attempted to be formed. However, the dispersion solution did not sufficiently permeate beyond a distance of 120 mm from the left, and the surface resistivity is unmeasurable (indicated as -).

**[Table 4]**

| | | 40mm | | 80mm | | 120mm | | 160mm | | 200mm | | 240mm | | 280mm | | 320mm | | 360mm | | 400mm | |
|---|---|---|---|---|---|---|---|---|---|---|---|---|---|---|---|---|---|---|---|---|---|
| 40mm | 1.30E+03 | | 1.00E+04 | | 6.40E+04 | | - | | - | | - | | - | | - | | - | | - | | |
| 80mm | 1.20E+03 | | 5.10E+05 | | 1.00E+15 | | - | | - | | - | | - | | - | | - | | - | | |
| 120mn | 2.90E+03 | | 3.10E+04 | | 6.60E+04 | | - | | - | | - | | - | | - | | - | | - | | |

It will be obvious from Tables 3 and 4 that upon adding the viscosity-decreasing agent for fine carbon fiber, the fine carbon fiber dispersion solution exhibits the viscosity that is lowered down to the viscosity exhibited by the resin without fine carbon fiber. Irrespective of the method of producing the thermosetting resin formed articles, therefore, it is obvious that the thermosetting resin formed articles containing the reinforcing fiber and fine carbon fiber produced by using the fine carbon fiber dispersion solutions of the invention exhibit small dispersion of the resistivity among various portions of the resin formed articles.

### Example 10.

### <Evaluating the dynamic properties of the hand lay-up method producing thermosetting resins containing reinforcing fiber and fine carbon fiber >

The curing agent was mixed in compliance with Example 9 to the fine carbon fiber dispersion solutions of the Runs Nos. 17 and 18 (which were prepared by the same method as that of Run No. 1 but changing the kind and concentration of the fine carbon fiber and the kind and concentration of the viscosity-decreasing agent as shown in Table 5). The glass cloths were impregnated with the mixed solutions by the hand lay-up method, and the mixed solutions were cured to obtain thermosetting resin plates containing the fine carbon fiber which includes reinforcing fiber (150 high x 150 wide x 1.5 mm thick), then their dynamic properties were evaluated in compliance with the three-point flexural test items specified under the JIS K7017. The evaluated results were shown in Table 5.

For comparison, a thermosetting resin plate was formed in compliance with Example 10 but using a thermosetting resin solution containing neither fine carbon fiber nor viscosity-decreasing agent (Comparative No. 6, Neopor 8250L comprising chiefly a vinyl ester resin, produced by Nihon Upica Co.), and was evaluated for its dynamic properties. The evaluated results were shown in Table 5.

### Example 11.

### <Evaluating the dynamic properties of the hand lay-up method producing thermosetting resins containing reinforcing fiber and fine carbon fiber >

The curing agent was mixed in compliance with Example 9 to the fine carbon fiber dispersion solutions of the Runs Nos. 19, 20 and 21 (which were prepared by the same method as that of Run No. 1 but changing the kind and concentration of the fine carbon fiber and the kind and concentration of the viscosity-decreasing agent as shown in Table 5). By using the mixed solutions, thermosetting resin plates containing the fine carbon fiber which includes reinforcing fiber (150 high x 150 wide x 1.3 mm thick) were prepared in compliance with Example 10 and then their dynamic properties were evaluated in compliance with the three-point flexural test items specified under the JIS K7017. The evaluated results were shown in Table 5.

For comparison, a thermosetting resin plate was formed in compliance with Example 11 but using a thermosetting resin solution (Comparative No. 7, Neopor 8250L comprising chiefly a vinyl ester resin, produced by Nihon Upica Co.) containing fine carbon fiber but no viscosity-decreasing agent, and its dynamic properties was evaluated. The evaluated results were shown in Table 5.

**Table 5**

| | CNT concentration (mass parts) | Kind of CNT | Concentration of viscosity-decreasing agent (mass%) | Kind of viscosity-decreasing agent | Flexural strength (MPa) | Flexural modulus of elasticity (GPa) |
|---|---|---|---|---|---|---|
| Run No. 17 | 1.00 | CT-12K | 1.75 | BL-S | 329 | 12.3 |
| Run No. 18 | 0.50 | NT-7K | 1.75 | BL-S | 423 | 13.2 |
| Run No. 19 | 0.50 | NT-7K | 2.50 | BL-S | 399 | 15.9 |
| Run No. 20 | 0.50 | NT-7K | 5.00 | BL-S | 438 | 17.1 |
| Run No. 21 | 0.75 | NT-7K | 5.00 | BL-S | 456 | 16.2 |
| Comp. No. 6 | - | - | - | - | 302 | 12.0 |
| Comp. No. 7 | 0.50 | NT-7K | - | - | 392 | 15.5 |

It will be learned from Tables 3 to 5 that upon adding the viscosity-decreasing agent for fine carbon fiber, the thermosetting resin formed articles produced by using the fine carbon fiber dispersion solution of the present invention, containing the fine carbon fiber which includes reinforcing fiber, suppress the fine carbon fiber disentangled by the mechanical dispersion treatment from aggregating again and contribute to lowering the viscosity of the fine carbon fiber dispersion solutions. As a result, the fine carbon fiber-containing thermosetting resin and the thermosetting resin formed articles containing the fine carbon fiber which includes reinforcing fiber, feature both decreased dispersion in the electric conduction among various portions and improved dynamic properties.

### Industrial Applicability:

Upon using the viscosity-decreasing agent for fine carbon fiber, the present invention makes it possible to obtain a fine carbon fiber dispersion solution having high preservation stability and low viscosity, and to easily produce thermosetting resin formed articles containing reinforcing fiber and fine carbon fiber by using the fine carbon fiber dispersion solution. Owing to its high electrically conducting property and high dynamic properties, the obtained thermosetting resin containing reinforcing fiber and fine carbon fiber can be used in the field of electronic devices for that static electricity is undesirable, in the field related to electromagnetic waves, heat-radiating materials and where dynamic properties such as high strength and high modulus of elasticity are required.

## Claims

1. A thermosetting resin-containing solution in which a fine carbon fiber is dispersed, comprising (A) a thermosetting resin, (B) the fine carbon fiber and (C) a viscosity-decreasing agent for fine carbon fiber having a chemical structure represented by the following general formula (1),
[Chemical 1] 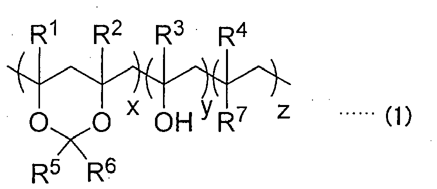 wherein R¹ to R⁴, independently from each other, are represented by hydrogen atoms, hydroxyl groups, alkyl groups, hydroxyalkyl groups, alkyloxy groups, acyloxy groups, carboxyl groups, acyl groups, primary amino groups, secondary amino groups, tertiary amino groups, aryl groups, aryloxy groups or heterocyclic groups,
R⁵ and R⁶, independently from each other, are represented by hydrogen atoms, alkyl groups, aryl groups or heterocyclic groups, and R⁵ and R⁶ may be bonded together to form a ring,
R⁷ is represented by a hydrogen atom, an alkyl group, a hydroxyalkyl group, an alkyloxy group, an acyloxy group, a carbonyl group, a carboxyl group, a primary amino group, a secondary amino group, a tertiary amino group, an aryl group, an aryloxy group or a heterocyclic group,
R¹ to R⁷ all have not more than 30 carbon atoms, and
In the formula (1), if assuming that the unit x has 4 carbon atoms, and the units y and z have 2 carbon atoms, respectively, the calculated average total carbon number (4x + 2y + 2z) in the compound is in the range from 400 to 6000; and if x, y and z are each an integer of 1 or more, 0.6 ≦ (x + z)/(x + y + z) ≦ 0.9 is satisfied; and if x is 0 and y and z are each an integer of 1 or more, 0.6 ≦ y/(y + z) ≦ 0.9 is satisfied.

2. The thermosetting resin-containing solution according to claim 1, wherein (C) said viscosity-decreasing agent for fine carbon fiber has a chemical structure represented by the following general formula (2),
[Chemical 2] 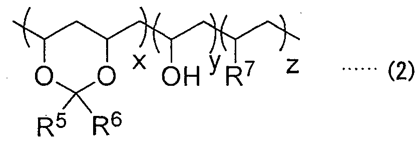 wherein R⁵ to R⁷, x, y and z are as defined in said formula (1).

3. The thermosetting resin-containing solution according to claim 1, wherein (C) said viscosity-decreasing agent for fine carbon fiber has a chemical structure represented by the following general formula (3),
[Chemical 3] 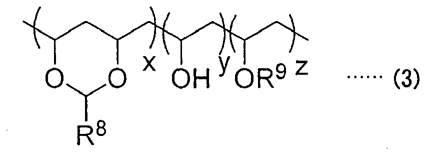 wherein R⁸ is represented by a hydrogen atom, an alkyl group, an aryl group or a heterocyclic group each having 1 to 30 carbon atoms,
R⁹ is represented by a hydrogen atom, an alkyl group, an alkylcarbonyl group, an aryl group or a heterocyclic group each having 1 to 30 carbon atoms, and
In the formula (3), if assuming that the unit x has 4 carbon atoms, and the units y and z have 2 carbon atoms, respectively, the calculated average total carbon number (4x + 2y + 2z) in the compound is in the range from 400 to 6000; and if x, y and z are each an integer of 1 or more, 0.75 ≦ (x + z)/(x + y + z) ≦ 0.9 is satisfied; and if x is 0 and y and z are each an integer of 1 or more, 0.75 ≦ y/(y + z) ≦ 0.9 is satisfied.

4. The thermosetting resin-containing solution according to any one of claims 1 to 3, wherein (A) said thermosetting resin is a two-liquid mixed type thermosetting resin.

5. The thermosetting resin-containing solution according to any one of claims 1 to 4, wherein a styrene monomer is contained in an amount of 20 to 60% by mass in the thermosetting resin-containing solution.

6. The thermosetting resin-containing solution according to any one of claims 1 to 5, wherein said viscosity-decreasing agent for fine carbon fiber is contained in an amount of 0.01 to 50 parts by mass per 100 parts by mass of (B) the fine carbon fiber.

7. The thermosetting resin-containing solution according to any one of claims 1 to 6, wherein (B) said fine carbon fiber is contained in said thermosetting resin-containing solution in an amount of 0.01 to 30 parts by mass per 100 parts by mass of said resin-containing solution.

8. The thermosetting resin-containing solution according to any one of claims 1 to 7, wherein (B) said fine carbon fiber is a fine carbon fiber having an outer diameter of 0.5 to 200 nm.

9. The thermosetting resin-containing solution according to any one of claims 1 to 8, wherein (B) said fine carbon fiber is a network-like structure of the fine carbon fiber comprising multilayered fine carbon fibers having an outer diameter of 15 to 150 nm, the structure of the fine carbon fiber being in appearance that a plurality of fine carbon fibers stretching out, having granular portions by which the fine carbon fibers are bonded together, and the granular portions being formed during the growing process of the structure of the fine carbon fiber and having a grain size not less than 1.3 times as great as the outer diameter of the fine carbon fibers.

10. A thermosetting resin formed article containing fine carbon fiber obtained by curing the thermosetting resin-containing solution of any one of claims 1 to 9.

11. A thermosetting resin formed article containing a reinforcing fiber and a fine carbon fiber obtained by that a cloth, a sheet or a mat of said reinforcing fiber is impregnated with the thermosetting resin-containing solution of any one of claims 1 to 9 and cured.

12. The thermosetting resin formed article according to claim 11, wherein said reinforcing fiber is a glass fiber, a carbon fiber or an aramid fiber.

13. The thermosetting resin formed article according to claim 11, wherein said reinforcing fiber is the glass fiber.

14. The thermosetting resin formed article according to claim 11, wherein said formed article has a surface resistivity of 1 x 10¹ to 1 x 10¹¹ Ω/□.

15. A method of producing a thermosetting resin formed article containing a fine carbon fiber, comprising:
(1) the step of preparing the thermosetting resin-containing solution described in any one of claims 1 to 9; and
(2) the step of curing the thermosetting resin-containing solution obtained in said step (1) by adding, as required, a curing agent thereto.

16. A method of producing a thermosetting resin formed article containing a reinforcing fiber and a fine carbon fiber, comprising:
(1) the step of preparing the thermosetting resin-containing solution described in any one of claims 1 to 9;
(2') the step of impregnating a cloth, a sheet or a mat of a reinforcing fiber with the thermosetting resin-containing solution obtained in said step (1) by adding, as required, a curing agent thereto; and
(3) the step of curing the cloth, the sheet or the mat of the reinforcing fiber impregnated with the thermosetting resin obtained in said (2').
